# EUROPÄISCHE PATENTSCHRIFT

(11) **EP 0 425 879 B1**
(45) Veröffentlichungstag und Bekanntmachung des Hinweises auf die Patenterteilung: **11.08.1993**
(21) Anmeldenummer: 90119724.4
(22) Anmeldetag: 15.10.1990
(51) Int. Cl.: C03C 25/02, C04B 35/00, B32B 17/02

(54) **Verfahren zur Herstellung eines im ungebrannten Zustand aufwickelfähigen kermischen Furniers**
Process for manufacturing an unfired windable veneer
Procédé de préparation d'un matériau céramique revêtement enroulable en cru

(30) Priorität: 03.11.1989 DE 3936561
(43) Veröffentlichungstag der Anmeldung: 08.05.1991
(73) Patentinhaber: Degussa Aktiengesellschaft, 60311 Frankfurt (DE); Glaswerk Schuller GmbH, 97877 Wertheim (DE)
(72) Erfinder: Hammer, Josef, W-6242 Kronberg (DE); Völker, Werner, Dr., W-6368 Bad Vilbel (DE); Hahmann, Paul Friedrich, W-6980 Wertheim (DE)

(56) Entgegenhaltungen:
- BE-A- 624 215
- DE-A- 2 507 226
- DE-A- 3 145 031
- FR-A- 2 337 751
- CHEMICAL ABSTRACTS, Band 107, Nr. 16, 19. Oktober 1987, Seite 337, Spalte 2, Zusammenfassung Nr. 139566k, Columbus, Ohio, US; & JP-A-87 124 940 (IG-TECHNICAL RESEARCH INC.) 06-06-1987

## Beschreibung

Die Erfindung betrifft ein Verfahren zur Herstellung eines keramischen Furniers, das im ungebrannten Zustand aufwickelfähig ist und damit als Endlosband dekoriert und gebrannt werden kann. Das keramische Furnier besteht aus einem flächigen Basismaterial aus anorganischen Fasern, vorzugsweise einem Glasfaservlies, das beidseitig mit keramischem Material, vorzugsweise auf der einen Seite mit einer Masseschicht und auf der anderen Seite mit einer Glasurschicht, beschichtet ist. Zur Herstellung des Furniers werden organische Bindemittel enthaltende keramische Schlicker auf das Basismaterial aufgetragen und freischwebend getrocknet.

Um großflächige Bauteile mit keramischen Belägen zu versehen, besteht zunehmend Bedarf an keramischen Furnieren. Obgleich verschiedene Wege zur Herstellung solcher Furniere eingeschlagen wurden, befriedigen sie bezüglich ihrer Gebrauchseigenschaften und/oder der Wirtschaftlichkeit der Herstellverfahren noch nicht in allen Punkten.

In dem US-Patent 2 307 332 wird die Herstellung keramischer Furniere beschrieben, wobei eine feinkörnige keramische Masse, welche ein schmelzbares Bindemittel enthält, auf einem brennbaren Träger dem Brennofen zugeführt wird. Beim Brennen schmilzt nur das Bindemittel und verbindet damit die keramischen Körner. Zwar wurde auch vorgeschlagen, eine Verstärkungsschicht, wie ein Metallsieb oder Mineralwolle, in die Masse einzubetten, jedoch konnte hierdurch die Festigkeit der Furniere nicht gesteigert werden. Im ungebrannten Zustand lassen sich solche Furniere nicht schadenfrei aufwickeln und in dieser Form weiteren Veredelungsschritten zuführen.

Gemäß DE-Patent 2061105 werden keramische Furniere durch Auftragen eines dünnflüssigen keramischen Schlickers auf einen wasserdurchlässigen oder saugfähigen brennbaren Träger und nachfolgend gemeinsames Brennen, wobei der Träger verbrennt, hergestellt. Um Rißbildungen beim Vortrocknen der Schlickerschicht auszuschließen, wurde gemäß DE-PS 22 01 435 - Zusatzpatent zu DE-PS 20 61 105 - in die auf den brennbaren Träger aufgebrachte Schlickerschicht eine Schicht aus Glas- oder Mineralfasern eingebracht. Auf die Faserschicht konnte eine zweite Schlickerschicht aufgebracht werden; zusätzlich konnte auf die jeweils oben liegende Schicht eine glasurbildende Masse aufgetragen werden.

Die Verwendung des brennbaren Trägers wird auch bei den Faserschicht enthaltenden Systemen für erforderlich gehalten, um die Beschichtung und Trocknung zu ermöglichen. Es zeigte sich aber, daß die Verbrennung des Trägers während des Brandes nicht problemlos verläuft. Die keramischen Furniere der vorstehend beschriebenen Art sind im ungebrannten Zustand auch nicht aufwickelfähig, weil wegen des Fehlens von elastifizierend wirkenden Bindemitteln das Auf- und Abwickeln zwangsläufig zur Rißbildung führt.

Keramische Platten oder Fliesen aus einer keramischen Masseschicht, einem auf den feuchten Massestrang aufgewalzten, gegebenenfalls dekorierten, Vlies oder Tuch, zum Beispiel aus Glasfasern, und einer darüber befindlichen Glasur sind aus der DE-OS 32 46 270 bekannt, jedoch lassen sich diesem Dokument keine Anregungen entnehmen, wie solche Systeme in Form von Furnieren hergestellt werden können. Ein Furnier aus mindestens zwei Schlickerschichten unterschiedlicher Zusammensetzung und einem auf der obersten Schlickerschicht und/oder zwischen zwei Schlickerschichten angeordneten Glasvlies ist Gegenstand der DE-PS 26 39 522. Zur Herstellung eines solchen Furniers werden die Schlicker auf ein endloses umlaufendes Band aufgetragen, mit dem Glasvlies beaufschlagt und anschließend im Brennofen gebrannt. Der ungebrannte Artikel ist für ein Aufwickeln ungeeignet, vielmehr muß er direkt im Anschluß an die Trocknung gebrannt werden.

Eine ungebrannte Glasur in Folienform, bei der die Glasurrohstoffe zu einem wesentlichen Teil, vorzugsweise überwiegend und am besten vollständig in Faserform vorliegen, ist aus der DE-PS 1 936 888 bekannt. Sofern teilchenförmige Glasurrohstoffe mitverwendet werden, werden diese in Form einer Suspension, welche 0,1 bis 2 Gewichtsprozent, bezogen auf auspendierte Feststoffe, eines Klebe- oder Bindemittels enthält, auf ein Vlies, ein Gewebe oder Gewirke, etwa durch Tränken derselben in der Suspension, aufgebracht. In diesem Dokument wird darauf hingewiesen, daß ein höherer Gehalt an Bindemitteln nachteilig ist, weil diese sich beim Brand zersetzen und damit in der Glasur Blasen bilden. Der Gegenstand der DE-PS 1 936 888 richtet sich somit ausschließlich auf eine ungebrannte Glasurfolie und nicht auf ein keramisches Furnier, das überwiegend aus teilchenförmigen keramischen Materialien aufgebaut ist. Sofern die ungebrannte Glasurfolie der DE-PS 1 936 888 außer den Faserbestandteilen auch teilchenförmige Glasurbestandteile enthält, müssen diese in ihrer Zusammensetzung jener des Fasermaterials sehr nahe kommen. Damit sind der Auswaht an Glasurbestandteilen und deren Zusammensetzung sehr enge Grenzen gesetzt.

In der EP-B 159 514 wird ein Decklagenmaterial auf Vlies- oder Gewebebasis offenbart, das nur einseitig eine Beschichtung aus pulverförmigem anorganischen Material aufweist, wobei die Beschichtung mindestens 6 Gewichtsprozent atro organisches Bindemittel enthält. Das Decklagenmaterial wird aber keinem keramischen Brand zugeführt, weshalb sich die Probleme einer Blasenbildung durch Zersetzung des Polymers und/oder einer unbefriedigenden Verbindung zwischen Faserstoff und Teilchen hier nicht stellen. Zur Herstellung des Decklagenmaterials wird beispielsweise ein Glasfaservlies auf einer Rakelstreichanlage mit einer Masse aus dem anorganischen Pulver, einer Kunststoffdispersion und üblichen Hilfsstoffen beschichtet und getrocknet. Einsetzbar sind Vliese mit einem Flächengewicht zwischen 35 und 350 g/m²; die Auftragsgewichte liegen im Bereich von 150 bis 450 g/m².

Die Aufgabe der Erfindung besteht nun in der Bereitstellung eines einfachen Verfahrens zur Herstellung eines im ungebrannten Zustand aufwickelbaren keramischen Furniers durch Beschichtung eines Basismateriales aus anorganischen Fasern mit teilchenförmigem keramischen Material. Das ungebrannte Furnier sollte sicher, das heißt, ohne Rißbildung und ohne Verkleben der Oberflächen des Furniers, auf- und abgewickelt und in dieser Form weiteren Dekorationsschritten und dem Brand zugeführt werden können. Ferner sollte das Furnier in Dicken von 0,1 mm bis 5 mm bei möglichst geringem Flächengewicht des Basismateriales und hoher Auftragsmenge an Hasse und/oder Glasur hergestellt werden können.

Gefunden wurde ein Verfahren zur Herstellung eines im ungebrannten Zustand aufwickelfähigen keramischen Furniers durch Beschichten eines Basismaterials aus anorganischen Fasern mit teilchenformige keramische Materialien enthaltenden wäßrigen Schlickern, dadurch gekennzeichnet,
daß man auf eine endlose Bahn des Basismaterials ohne Verwendung eines zusätzlichen Trägers beidseitig eine oder mehrere Schlickerschichten aufträgt, nach der Beschichtung der ersten Seite zwischentrocknet und nach der Beschichtung beider Seiten auf einen Restfeuchtegehalt von maximal 10 Gew.-% freitragend trocknet und das Furnier, sofern erwünscht, nach vorangehender Dekorierung aufwickelt, und daß man ein Basismaterial aus anorganischen Fasern mit einem Flächengewicht von 30 bis 200 g/m² verwendet und dieses mit mindestens 500 g/m² keramischem Material beschichtet und die verwendeten Schlicker ein organisches Bindemittel in einer Menge von 3 bis 20 Gew.-%, bezogen auf die Feststoffe, enthalten, welche sich beim Aufheizen von 250°C bis 600°C im wesentlichen gleichmäßig und rückstandsfrei zersetzen. Die Unteransprüche richten sich auf bevorzugte Ausführungsformen des Verfahrens. Bei dem zu beschichtenden Basismaterial aus anorganischen Fasern handelt es sich um flächige Gebilde mit zum Beispiel einer Vlies-, Gewebe- oder Gewirkestruktur, wobei eine Vliesstruktur besonders bevorzugt ist.

Das erfindungsgemäß hergestellte ungebrannte keramische Furnier ist 0,5 bis 5 mm, vorzugsweise 1-2 mm dick und kann auch als Grünfolie bezeichnet werden. Im ungebrannten Zustand läßt sich das Furnier mehrmals auf- und abwickeln und über Rollen umlenken, ohne daß es zu Schäden kommt, welche das Furnier unbrauchbar machen würden. Zum Aufwickeln eignen sich sogenannte Hülsen, deren Durchmesser bei dickeren Furnieren großer sein sollte als bei dünneren Furnieren; 6-Zoll-Hülsen sind für 1-2 mm dicke Furniere gut einsetzbar.

Die besonderen Vorteile der im ungebrannten Zustand aufwickelbaren keramischen Furniere liegt darin, daß sie sehr einfach und wirtschaftlich herstellbar sind, im Gegensatz zu Grünfolien auf zum Beispiel Papierträgern eine hohe Dimensionsstabilität aufweisen und damit passergenau bedruckt werden können und daß sie in dieser Form direkt vermarktet und/oder kunden- oder herstellerseitig in kontinuierlichen Verfahren dekoriert, beispielsweise durch Bedrucken mit keramischen Farben und/oder Strukturierung der Oberfläche, und schließlich bei im allgemeinen 800 bis 1300°C gebrannt werden können.

Nach dem Brand steht ein Furnier zur Verfügung, das die Beschichtung sehr großer Bauteile ohne Fugen ermöglicht. Zusätzlich können beliebige Formteile nach dem Laserschneidverfahren zugeschnitten werden. Durch entsprechende Auswahl der Beschichtungsmaterialien lassen sich Furniere mit auf den Anwendungszweck abgestimmten Eigenschaften herstellen.

Es war nicht vorhersehbar, daß ein flächiges Basismaterial, insbesondere ein Faservlies aus anorganischen Fasern, wie Glasfasern, Gesteins- und Schlackefasern, wobei Glasfasern bevorzugt sind, ohne Mitverwendung eines unterstützenden Trägers mit der vielfachen Menge seines Eigengewichts mit teilchenformige keramische Materialien enthaltenden Schlickern beidseitig beschichtet werden kann. Bei einem Flächengewicht des Basismaterials im Bereich von 30 -200 g/m², vorzugsweise 50 - 100 g/m², beträgt die Beschichtungsmenge mindestens 500 g/m², vorzugsweise etwa 1000 g/m² bis 2000 g/m² , jedoch sind auch darüber hinausgehende Flächengewichte bis etwa 5000 g/m² zugänglich. Ein Gewichtsverhältnis der gesamten Beschichtung pro m² zum Flächengewicht des Basismaterials (g/m²) von über 10 : 1, insbesondere etwa 20 bis 40 zu 1 wird bevorzugt. Die keramische Grünfolie besteht somit überwiegend aus teilchenförmigen Bestandteilen.

Ein Vlies aus Glasfasern mit einem Flächengewicht von 50 - 100 g/m² und einer Faserstärke im Bereich von 8 - 15 Mikrometer ist gut geeignet. Die Verwendung eines Vlieses aus Fasern mit größerem Faserdurchmesser bringt eher Nachteile denn Vorteile mit sich. Die chemische Zusammensetzung der Glasfasern und damit ihre physikalischen Eigenschaften, wie ihr Erweichungsprofil, können sehr unterschiedlich sein. Besonders bevorzugt sind Fasern aus sogenanntem E-Glas, das üblicherwiese 53-55 Gewichtsprozent SiO₂, 14-16 Gewichtsprozent Al₂O₃, 6-9 Gewichtsprozent B₂O₃, 20-25 Gewichtsprozent Erdalkalioxide und unter 1 Gewichtsprozent Alkalioxide enthält und bei etwa 800°C erweicht.

Das Faservlies muß eine ausreichende Zugspannungvorzugsweise um/über 100 N/5 cm - aufweisen, um den geforderten Beschichtungsauftrag trägerlos aufnehmen zu können. Die Festigkeit des Vlieses muß sowohl im nassen Zustand als auch im trockenen Zustand und beim Aufheizen der Grünfolie bis zur Temperatur der ersten Sintervorgänge gegeben sein. Die Fasern sollen zudem über einen großen pH-Bereich hinweg stabil sein. Der Mindestauftrag an Beschichtung wird von der Porosität des Vlieses bestimmt, der maximale Auftrag ist im wesentlichen abhängig von den Festigkeitsdaten des Vlieses unter den angesprochenen Verfahrensbedingungen.

Die erfindungsgemäßen Grünfolien, also die aufwickelbaren ungebrannten Furniere, werden durch Beschichten des offenen Basismaterials mit teilchenförmige keramische Materialien und anorganische Bindemittel enthaltenden wäßrigen Schlickern und Trocknen der Beschichtung hergestellt. Das leicht vorgespannte endlose Basismaterial wird ohne zusätzlichen Träger, wie er bei vorbekannten Verfahren erforderlich war, unter Verwendung an sich bekannter Beschichtungsvorrichtungen zunächst auf der ersten Seite beschichtet. Die Luftrakeltechnik wird bevorzugt. Auf die erste Schicht kann man unmittelbar danach oder nach Zwischentrocknung eine oder gegebenenfalls mehrere weitere Schichten aufbringen. Das so erhaltene, einseitig beschichtete Basismaterial wird soweit getrocknet, daß es aufgewickelt und über Umlenkeinrichtungen gewendet werden kann. Das gewendete, einseitig beschichtete Basismaterial wird anschließend auf der zweiten Seite ein- oder mehrfach beschichtet, auf eine Restfeuchte von unter 10 Gew.-%, vorzugsweise unter 8 Gew. -%, bei Temperaturen bis etwa 250°C getrocknet und, gegebenenfalls nach Dekorationsschritten und, soweit erforderlich, Kühlung, aufgewickelt.

Die verwendeten Schlicker enthalten feinkörnige keramische Bestandteile, wie sie zur Herstellung keramischer Masseschichten, worunter auch Engobeschichten verstanden werden, und Glasuren Anwendung finden. Gemäß einer bevorzugten Ausführungsform wird das Basismaterial auf der einen Seite mit einer Masse- oder gegebenenfalls Engobeschicht, und auf der anderen Seite mit einer Glasurschicht versehen. Die Zusammensetzung der Masseschicht kann zum Beispiel derjenigen eines Steinguts, eines Steinzeugs oder Porzellans entsprechen.

Bestandteile der Masseschicht sind im allgemeinen Tone, ferner Kaolin, Feldspäte, Kalkspäte, Nephelin und Quarzmehl; zusätzlich können Sinterhilfsstoffe, wie Glasurfritten, und ausgewählte Oxide und/oder Flußmittel zur Modifizierung der Eigenschaften enthalten sein. Eine hohe Dichte der Masseschicht gewinnt man durch die Anwesenheit von Feldspäten und/oder Sinterhilfsmitteln oder durch eine hohe Brenntemperatur. Der Glasurbestandteile enthaltende Schlicker kann übliche Bestandteile einer Rohglasur und/oder einer Fritteglasur enthalten, wobei letztere bevorzugt sind. Die Herstellung des Masse- und des Glasurschlickers erfolgt in üblicher Weise und schließt, soweit erforderlich, eine Naßmahlung und die Mitverwendung organischer und anorganischer Stellmittel zur Modifizierung des Fließverhaltens des Schlickers ein. Die Feststoffkonzentration der wäßrigen Schlicker hängt von den ausgewählten keramischen Bestandteilen und der gewünschten Verarbeitungsviskosität ab. Im allgemeinen ist man bestrebt, bei möglichst hoher Feststoffkonzentration einen für die Beschichtung in der gewünschten Auftragsstärke gut fließfähigen Schlicker zu verwenden.

Um ein Furnier mit einer qualitativ hochwertigen Deckschicht, vorzugsweise einer Glasur, auszubilden, müssen das Basismaterial und die Glasur bezüglich ihrer physikalischen Eigenschaften aufeinander abgestimmt sein. Dies wird, wie nun gefunden wurde, dadurch erreicht, daß man eine Glasurfritte bzw. glasurbildende Bestandteile in einer solchen Zusammensetzung verwendet, deren Erweichungstemperatur etwa mit jener des Basismaterials übereinstimmt, bzw., wenn beide Komponenten der Systems ein eutektisches Schmelzverhalten zeigen. Werden beispielswiese ein tiefschmelzendes Glasfaservlies, etwa aus C-Glas mit einem Erweichungspunkt um 650°C, mit einer hochschmelzenden Glasur kombiniert, kommt es beim Brand leicht zu Aufrissen in der Glasur. Der Fachmann kann sich anhand des Schmelzverhaltens der Faser und der Glasurfritte im Erhitzungsmikroskop ein Bild über den Erweichungspunkt und die wechselseitige Benetzungsfähigkeit machen. Während nach dem Stand der Technik angenommen wurde, daß eine ähnliche Zusammensetzung der Faser und der Glasur zwingende Voraussetzung für eine Kompatibilität sei, wurde nun erkannt, daß auch Systeme unterschiedlicher Zusammensetzung kompetibel sind, wenn ihr Schmelz- und Benetzungsverhalten etwa gleich oder zumindest sehr ähnlich ist. Erfindungsgemäß wurde somit die Kombinationsfähigkeit der Komponenten des keramischen Furniers erheblich erweitert. Das Basismaterial darf bis 250°C keinen Festigkeitsabfall erleiden.

Ein erfindungswesentliches Merkmal des Verfahrens richtet sich auf die verwendeteten organischen Bindemittel. Das Bindemittel, das in einer Menge von 3-20 Gewichtsprozent, vorzugsweise 5-10 Gewichtsprozent,bezogen auf die Feststoffe, eingesetzt wird, muß ein hohes Feststoffbindevermögen aufweisen und dem ungebrannten keramischen Furnier die erforderliche Flexibilität verleihen. Durch die Verwendung von Bindemitteln, welche vor oder während der Trocknung elastisch vernetzt werden können, gelangt man zu besonders gut auf- und abwickelbaren Grünfolien, weil das Bindemittel die Rückstellung der Teilchen der Beschichtung in die ursprüngliche Position ermöglicht.

Als wesentliches Merkmal des Bindemittels wurde auch sein Verhalten beim Brand erkannt: Das Bindemittel muß nicht nur rückstandsfrei verbrennen beziehungsweise sich zersetzen und gasförmig aus der Beschichtung entweichen, sondern dieser Abbau muß sich im wesentlichen gleichmäßig beim Aufheizen der Günfolie im Temperaturbereich von 250°C bis 600°C vollziehen. Bindemittel, welche sich innerhalb eines engen Temperaturinterwalls zersetzen, reißen die Beschichtung blasig auf. Die Bindemittel müssen ferner gegenüber Bestandteilen der Schlicker stabil sein und eine ausreichende Scherstabilität aufweisen.

Als Bindemittel sind insbesondere Acrylatpolymere und -copolymere, Acrylat/Acrylnitril-Copolymere, Ethylen/Vinylacetat-Copolymere, Ethylen/Vinylacetat/Acrylat-Terpolymere, Styrol/Acrylat-Copolymere sowie Polyurethane geeignet; bevorzugt werden elastifizierend vernetzende Bindemittel der genannten Klassen eingesetzt. Anstelle der genannten Polymere und Copolymere auf Acrylatbasis können auch solche auf Methacrylatbasis verwendet werden; bevorzugt werden C₁ bis C₁₂ - Alkyl- insbesondere C₁ bis C₄ - Alkylacrylate bzw. -methacrylate verwendet. In der Praxis werden die genannten Bindemittel vorzugsweise in Form wäßriger, 40-60 gew.-%iger Dispersionen verwendet.

Anstelle Bindemittel in wäßriger Dispersion einzusetzen, können den Schlickern Bindemittel auch in Pulverform zugegeben werden. Um die erforderliche Wirkung entfalten zu können, müssen die als Pulver anwendbaren Polymeren ausreichend fein verteilt sein und unter 250°C soweit schmelzen, daß die teilchenförmigen und faserförmigen Bestandteile des Furniers zumindest teilweise umhüllt und damit gebunden werden. Als Pulver einsetzbar sind, soweit verfügbar, Polymere aus den vorgenannten Klassen, aber auch Polymere wie Polyethylen, Polypropylen, Polybutylen, Polyvinylacetat und Copolymere mit Polyolefinen, ferner Polyester und Polyamide.

Die Schlicker können ferner Verarbeitungshilfsmittel, wie Viskositätsregelatoren, Netz- und Dispergierhilfsmittel und Entschäumer enthalten. Als Netz- und Dispergierhilfsmittel werden möglichst wenigschäumende anionische und nichtionische Produkte bevorzugt; der Fachmann wird die Kompatibilität des/der Hilfsmittel mit den übrigen Bestandteilen des Systems durch einen Vorversuch ermitteln. Entschäumer sind nicht generell erforderlich, jedoch kann es vorteilhaft sein, vor oder während der Beschichtung einen Entschäumer, jedoch keinen Siliconentschäumer, auf die Oberfläche des Vlieses aufzubringen.

Das erfindungsgemäße Verfahren ist, wie aufgezeigt wurde, einfach und wirtschaftlich durchführbar. Das Verfahrensprodukt kann als Rolle bis zu mehreren Metern Breite unterschiedlichersten Dekorationsverfahren zugeführt werden.

Eine oder beide Seiten der Grünfolie, vorzugsweise eine mit einer Glasur versehene Seite, können unter Verwendung von Dekorfarben, Dekorglasuren, Edelmetallpräparaten und sonstigen keramischen Dekorationsprodukten kontinuierlich dekoriert werden. Das Brennen der Grünfolie kann vom Normalbrand bis zum Schnellbrand stattfinden. Je nach Typ der Glasur und den Brennbedingungn lassen sich glänzende, halbmatte, seidenmatte und matte Oberflächen erzielen.

Gegenüber konventionellen Verfahren zur Herstellung plattenförmiger keramischer Artikel entfallen bei dem erfindungsgemäßen Verfahren Belastungen des Abwassers mit Ton- und Glasurschlämmen.

### Beispiel

Auf einer kontinuierlichen Beschichtungsanlage mit Luftrakeltechnik wurde ein von einer Rolle abgewickeltes Glasvlies auf der einen Seite mit einer Masse, auf der anderen Seite mit einer Glasur beschichtet, wobei nach der ersten Beschichtung zwischengetrocknet und nach der Beschichtung der zweiten Seite mit Heißluft bei einer Temperatur bis 250°C auf einen Restfeuchtegehalt von 6 Gewichtsprozent getrocknet wurde.

Zum Einsatz kam ein Glasfaservlies aus E-Glas mit einer Faserstärke von 10 µm und einen Flächengewicht von 50 g/m².

Die Masseschicht entsprach einem Steinzeug; chemische Zusammensetzung (sämtliche %-Angaben des Beispiels sind Gewicht-%):
SiO₂ 77,1 %, Al₂O₃ 18,5 %, B₂O₃ 2,4 %
Alkali- / Erdalkalioxide 2 %. Im Schlicker wurden bezogen auf Feststoffe, 90 % Sprühton und 10 % einer bei 800°C erweichenden Glasurfritte eingesetzt.

Die Zusammensetzung der Glasur:
SiO₂ 47,2 %, Al₂O₃ 25,0 %, B₂O₃ 0,8 %, ZrO₂ 10 %, Erdalkalioxide 10 %, ZnO 3,4 %, Na₂O 3,4 %, K₂O 0,2 % Im Glasurschlicker wurden übliche Bestandteile einer Rohglasur, darunter Feldspat, Kaolin, Korund, Zirkonoxid, Tonerdehydrat, Kalkspat, Talkum, sowie eine bei 830°C erweichende Glasurfritte eingesetzt.

Die Schlicker enthielten pro 1000 kg Masse beziehungsweise Glasurbestandteile 145 kg Bindemitteldispersion - 50 %ige wäßrige, weichmacherfreie Dispersion eines thermisch vernetzbaren Copolymerisats auf der Basis von Butylacrylat und Acrylnitril - , 175 kg Wasser (zusätzlich zum Wasser der Dispersion) und 29 kg handelsüblicher Netzmittelpräparate auf der Basis fettmodifizierter anionischer Tenside und nichtionischer Fettalkoholethoxylate.
Die problemlos auf- und abwickelbare Grünfolie war 2 mm dick. Der Brand erfolgte in einem Durchlaufofen in 45 Minuten bei 1120 - 1130°C.

## Patentansprüche

1. Verfahren zur Herstellung eines im ungebrannten Zustand aufwickelfähigen keramischen Furniers durch Beschichten eines Basismaterials aus anorganischen Fasern mit teilchenförmige keramische Materialien enthaltenden wäßrigen Schlickern, dadurch gekennzeichnet,
daß man auf eine endlose Bahn des Basismaterials ohne Verwendung eines zusätzlichen Trägers beidseitig eine oder mehrere Schlickerschichten aufträgt, nach der Beschichtung der ersten Seite zwischentrocknet und nach der Beschichtung beider Seiten auf einen Restfeuchtegehalt von maximal 10 Gew.-% freitragend trocknet und das Furnier, sofern erwünscht, nach vorangehender Dekorierung aufwickelt, und daß man ein Basismaterial aus anorganischen Fasern mit einem Flächengewicht von 30 bis 200 g/m² verwendet und dieses mit mindestens 500 g/m² keramischem Material beschichtet und die verwendeten Schlicker organische Bindemittel in einer Menge von 3 bis 20 Gew.-%, bezogen auf die Feststoffe, enthalten, welche sich beim Aufheizen von 250°C bis 600°C im wesentlichen gleichmäßig und rückstandsfrei zersetzen.

2. Verfahren nach Anspruch 1,
dadurch gekennezeichnet,
daß das verwendete Basismaterial Vliesstruktur aufweist.

3. Verfahren nach Anspruch 1 oder 2,
dadurch gekennzeichnet.
daß man ein Vlies aus Glasfasern, mit einem Flächengewicht von 50 bis 100 g/m² und einer Faserdicke von 8 bis 15 µm, verwendet.

4. Verfahren nach einem oder mehreren der Ansprüche 1 bis 3, dadurch gekennzeichnet,
daß man das Basismaterial, vorzugsweise Faservlies,auf der einen Seite mit einem keramischen Masseschlicker und auf der anderen mit einem Glasurschlicker beschichtet, wobei die Furnierdicke 0,5 bis 5 mm, vorzugsweise 1 bis 3 mm, beträgt.

5. Verfahren nach einem oder mehreren der Ansprüche 1 bis 4, dadurch gekennzeichnet,
daß man als Bindemittel Acrylatpolymere oder -copolymere, Acrylat/Acrylnitril-Copolymere, Ethylen/Vinylacelat-Copolymere, Ethylen/Vinylacetat/Acrylat-Terpolymere, Styrol/Acrylat-Copolymere oder Polyurethane verwendet.

6. Verfahren nach einem oder mehreren der Ansprüche 1 bis 4, dadurch gekennzeichnet,
daß man als Bindemittel Polymerpulver, wie Polyethylen, Polypropylen, Polyvinylacetat oder seine Copolymere mit Polyolefinen, Polyamid oder Polyester, verwendet, welche unter 250°C schmelzen und dabei die teilchen- und faserförmigen Bestandteile des ungebrannten Furniers binden.

7. Verfahren nach Anspruch 5 oder 6, dadurch gekennzeichnet,
daß man elastisch vernetzbare Polymere oder Copolymere verwendet und diese vor oder während der Trocknung vernetzt.

## Claims

1. A process for the production of a ceramic veneer which can be rolled up in the unstoved state by coating a basic material of inorganic fibres with aqueous slips containing particulate ceramic materials, characterised in that one or more layers of slip are applied to both sides of an endless web of the basic material without an additional support, intermediate drying is carried out after the first side has been coated and drying is then carried out in the unsupported state to a residual moisture content of at most 10% by weight after both sides have been coated and the veneer is then wound up if required after decoration, and in that a basic material of inorganic fibres having a weight per unit area of from 30 to 200 g/m² is used and this material is coated with at least 500 g/m² of ceramic material and the slips used contain organic binders in a quantity of from 3 to 20% by weight, based on the solids content, which binders decompose substantially uniformly and without leaving a residue when heated to temperatures of from 250 to 600°C.

2. A process according to Claim 1, characterised in that the basic material used has the structure of a non-woven web.

3. A process according to Claim 1 or 2, characterised in that a non-woven web of glass fibres having a weight per unit area of from 50 to 100 g/m² and a fibre thickness of from 8 to 15 µm is used.

4. A process according to one or more of Claims 1 to 3, characterised in that the basic material, preferably a non-woven web of fibres, is coated on one side with a ceramic mass slip and on the other side with a glazing slip, the thickness of the veneer being from 0.5 to 5 mm, preferably from 1 to 3 mm.

5. A process according to one or more of Claims 1 to 4, characterised in that the binders used are acrylate polymers or copolymers, acrylate/acrylonitrile copolymers, ethylene/vinyl acetate copolymers, ethylene/vinyl acetate/acrylate terpolymers, styrene/acrylate copolymers or polyurethanes.

6. A process according to one or more of Claims 1 to 4, characterised in that the binders used are polymer powders such as polyethylene, polypropylene, polyvinyl acetate or copolymers thereof with polyolefins, polyamide or polyesters, which melt at temperatures below 250°C and bind the particulate and fibrous components of the unstoved veneer in the process.

7. A process according to Claim 5 or 6, characterised in that elastically cross-linkable polymers or copolymers are used and these are cross-linked before or during drying.

## Revendications

1. Procédé de préparation d'un placage céramique enroulable à l'état non cuit par revêtement d'un matériau à base de fibres minérales avec des barbotines contenant des matériaux céramiques sous forme de particules, caractérisé en ce qu'on dépose sur une bande sans fin du matériau de base sans utiliser de support supplémentaire, de chaque côté, une ou plusieurs couches de barbotines, après le revêtement de la première face on sèche en intermédiaire et après revêtement des deux côtés on sèche sur caisson d'air à une teneur résiduelle en humidité de 10% en poids au maximum et, après décoration, si c'est souhaité, on enroule le placage, et en ce qu'on utilise un matériau de base en fibres minérales ayant un grammage de 30 à 200g/m² et on l'enduit avec au moins 500g/m² de matériau céramique et les barbotines utilisées contiennent des liants organiques à une concentration de 3 à 20% en poids, par rapport aux solides, qui se décomposent par chauffage entre 250°C et 500°C, essentiellement de façon homogène et sans résidu.

2. Procédé selon la revendication 1, caractérisé en ce que le matériau de base utilisé présente une structure de nappe.

3. Procédé selon la revendication 1 ou 2, caractérisé en ce qu'on utilise une nappe de fibres de verre avec un grammage de 50 à 100g/m² et une épaisseur de fibre de 8 à 15µm.

4. Procédé selon l'une ou plusieurs des revendications 1 à 3, caractérisé en ce qu'on enduit le matériau de base, de préférence de la nappe de fibres, sur l'un des côtés avec une barbotine de masse céramique et sur l'autre côté avec une barbotine de glaçure, l'épaisseur de placage étant de 0,5 à 5 mm de préférence 1 à 3 mm.

5. Procédé selon l'une ou plusieurs des revendications 1 à 4, caractérisé en ce qu'on utilise comme liant des polymères ou des copolymères acrylates, des copolymères acrylate/acrylonitrile, des copolymères éthylène/acétate de vinyle, des terpolymères éthylène/acétate de vinyle/acrylate, des copolymères styrène/acrylate ou des polyuréthanes.

6. Procédé selon l'une ou plusieurs des revendications 1 à 4, caractérisé en ce qu'on utilise comme liant de la poudre de polymère comme du polyéthylène, polypropylène, poly(acétate de vinyle) ou leurs copolymères avec des polyoléfines, polyamides ou polyesters, qui fondent en-dessous de 250°C et lient ainsi les composants de forme particulaire ou fibreuse du placage non cuit.

7. Procédé selon la revendication 5 ou 6, caractérisé en ce qu'on utilise des polymères ou des copolymères réticulables élastiquement et qu'on les réticule avant ou pendant le séchage.
